# EUROPÄISCHE PATENTSCHRIFT

(11) **EP 3 135 080 B1**
(45) Veröffentlichungstag und Bekanntmachung des Hinweises auf die Patenterteilung: **30.08.2023**
(21) Anmeldenummer: 15719181.8
(22) Anmeldetag: 22.04.2015
(51) Int. Cl.: H05B 47/115

(54) **ANORDNUNG UND VERFAHREN ZUR BELEUCHTUNG VON ARBEITSBEREICHEN**
ARRANGEMENT AND METHOD FOR ILLUMINATING WORKING AREAS
SYSTÈME ET PROCÉDÉ D'ÉCLAIRAGE DE ZONES DE TRAVAIL

(30) Priorität: 23.04.2014 DE 102014207632
(43) Veröffentlichungstag der Anmeldung: 01.03.2017
(73) Patentinhaber: Zumtobel Lighting GmbH, 6850 Dornbirn (AT)
(72) Erfinder: PETSCHULAT, Manfred, A-6922 Wolfurt (AT)
(74) Vertreter: Thun, Clemens
(86) Internationale Anmeldenummer: PCT/EP2015/058659
(87) Internationale Veröffentlichungsnummer: WO 2015/162153

(56) Entgegenhaltungen:
- EP-A1- 0 677 697
- WO-A1-2013/153495

## Beschreibung

Die vorliegende Erfindung betrifft eine Anordnung, die zur Beleuchtung eines Arbeitsbereichs mit einem oder mehreren Arbeitsplätzen vorgesehen ist. Ferner betrifft die Erfindung ein Verfahren zur Beleuchtung eines Arbeitsbereichs.

Im Vergleich zur allgemeinen Raumbeleuchtung stellt eine sog. Arbeitsplatzbeleuchtung eine sehr personalisierte Beleuchtung dar. Hierunter wird verstanden, dass ein Raum bspw. nicht durch die an seiner Decke angeordneten Leuchten gleichmäßig hell beleuchtet werden soll, sondern stattdessen das Licht gezielt zur Beleuchtung von bestimmten Bereichen genutzt wird, in denen gearbeitet wird. Insbesondere Schreibtisch-Arbeitsplätze erfordern dabei eine spezielle Beleuchtung, welche auch die entsprechenden Normen hinsichtlich der zur Verfügung stehenden Helligkeit sowie der Frage des Lichteinfalls erfüllt. Dabei muss in der Regel an dem Arbeitsplatz eine gewisse Mindesthelligkeit vorliegen und das Licht muss derart auf die Arbeitsfläche gerichtet werden, dass störende Reflexionen und/oder Blendungen vermieden werden.

Da die Position von Schreibtischen oder dergleichen häufig wechseln kann, wird eine Arbeitsplatzbeleuchtung in der Regel mit Hilfe einfach zu positionierender Leuchten durchgeführt. Als besonders effizient haben sich dabei Stehleuchten erwiesen, die in der Regel ohne größeren Aufwand an beliebiger Stelle angeordnet werden können und dann zur Beleuchtung eines Schreibtisches genutzt werden. Die Leuchten sind dabei in der Regel derart angeordnet und ausgeführt, dass sie den gesamten Schreibtisch mit dem zugehörigen Arbeitsplatz oder ggf. sogar einen Schreibtisch mit zwei zusammenhängenden Arbeitsplätzen ausleuchten.

In der WO 2013/153495 A1 werden Verfahren und Vorrichtungen vorgestellt, die eine selektiv eingesetzte Gesichtsbeleuchtung und optional eine selektiv eingesetzte Anwendungsbeleuchtung ermöglichen, zum Beispiel in tageslichtabhängigen Beleuchtungssystemen und/oder therapeutischen Beleuchtungssystemen.

Die EP 0 677 697 A1 zeigt eine an einer Decke aufhängbare Arbeitsplatzleuchte mit Raster, einem eingebauten Helligkeitssensor und einer Regelung der Lichtwelle in Abhängigkeit der im Bereich der Arbeitsfläche erfassten Beleuchtungsstärke.

Der vorliegenden Erfindung liegt die Aufgabenstellung zugrunde, das oben beschriebene Konzept zur Beleuchtung von Arbeitsbereichen weiter zu verbessern, so dass einerseits eine komfortable individuelle Beleuchtung der Arbeitsbereiche erzielt wird, andererseits der Energieverbrauch möglichst gering gehalten wird.

Die Aufgabe wird durch eine Anordnung zur Beleuchtung eines Arbeitsbereichs mit den Merkmalen des Anspruchs 1 sowie durch ein Verfahren zur Beleuchtung eines Arbeitsbereichs gemäß Anspruch 8 gelöst. Vorteilhafte Weiterbildungen der Erfindung sind Gegenstand der abhängigen Ansprüche.

Die erfindungsgemäße Lösung beruht auf dem Gedanken, die Anordnung zur Beleuchtung des Arbeitsbereichs derart auszugestalten, dass eine auf die Nutzung des Arbeitsbereichs individuell abgestimmte Beleuchtung erzielt werden kann. Die Leuchtmittel, welche zum Einsatz kommen, sind in diesem Fall derart ausgebildet, dass sie in der Lage sind, zumindest zwei Bereiche des Arbeitsbereichs getrennt bzw. unabhängig voneinander zu beleuchten. Ferner sind Sensormittel vorgesehen, mit deren Hilfe Informationen bzgl. der Benutzung des Arbeitsbereichs erhalten werden können. Abhängig von den durch die Sensormittel zur Verfügung gestellten Informationen werden dann die Leuchtmittel entsprechend angesteuert.

Erfindungsgemäß wird also eine Anordnung zur Beleuchtung eines Arbeitsbereichs vorgeschlagen, welche Leuchtmittel aufweist, welche dazu ausgebildet sind, zumindest zwei Bereiche des Arbeitsbereichs unabhängig voneinander zu beleuchten. Die erfindungsgemäße Anordnung weist ferner Sensormittel zum Ermitteln von Informationen bzgl. der Benutzung des Arbeitsbereichs sowie Steuermittel auf, welche die Leuchtmittel abhängig von durch die Sensormittel zur Verfügung gestellten Informationen ansteuern. Der Arbeitsbereich weist hierbei zumindest einen Arbeitsplatz auf und die Leuchtmittel sind dazu ausgebildet, drei Teilbereiche des Arbeitsplatzes unabhängig voneinander zu beleuchten, wobei zwei Teilbereiche Hälften des Arbeitsplatzes entsprechen und ein dritter Teilbereich einen zentralen Fokus im Bereich des Arbeitsplatzes darstellt, der innerhalb der beiden weiteren Teilbereiche liegt. Weiterhin ist die Steuereinheit dazu ausgebildet, die Leuchtmittel für den Fall, dass der Arbeitsplatz genutzt wird, derart anzusteuern, dass der dritte Bereich mit hoher Helligkeit beleuchtet wird und die beiden weiteren Teilbereiche mit einer reduzierten Helligkeit beleuchtet werden.

Ferner wird erfindungsgemäß ein Verfahren zur Beleuchtung eines Arbeitsbereichs vorgeschlagen, wobei Leuchtmittel zum Einsatz kommen, die dazu ausgebildet sind, zumindest zwei Bereiche des Arbeitsbereichs unabhängig voneinander zu beleuchten, und wobei zunächst Informationen bzgl. der Benutzung des Arbeitsbereichs ermittelt und abhängig davon die Leuchtmittel angesteuert werden, wobei der Arbeitsbereich zwei vorzugsweise zusammenhängende Arbeitsplätze aufweist. Der Arbeitsbereich weist hierbei zumindest einen Arbeitsplatz auf und die Leuchtmittel sind dazu ausgebildet, drei Teilbereiche des Arbeitsplatzes unabhängig voneinander zu beleuchten, wobei zwei Teilbereiche Hälften des Arbeitsplatzes entsprechen und ein dritter Teilbereich einen zentralen Fokus im Bereich des Arbeitsplatzes darstellt, der innerhalb der beiden weiteren Teilbereiche liegt. Ferner werden die Leuchtmittel für den Fall, dass der Arbeitsplatz genutzt wird, derart angesteuert, dass der dritte Bereich mit hoher Helligkeit beleuchtet wird und die beiden weiteren Teilbereiche mit einer reduzierten Helligkeit beleuchtet werden.

Kerngedanke der vorliegenden Erfindung ist also, dass bei der Beleuchtung des Arbeitsbereichs der insgesamt beleuchtbare Bereich nicht grundsätzlich gleichmäßig hell beleuchtet wird, sondern eine Unterscheidung dahingehend getroffen wird, ob und wie der Arbeitsbereich genutzt wird. Es könnte also bspw. vorgesehen sein, dass der Arbeitsbereich zwei vorzugsweise zusammenhängende Arbeitsplätze aufweist und dann abhängig davon, ob die Arbeitsplätze tatsächlich benutzt werden, nur die benutzten Plätze normgerecht beleuchtet werden. Wird bspw. nur einer der beiden Arbeitsplätze genutzt, so wird auch lediglich der entsprechende Bereich normgerecht beleuchtet, während hingegen der andere ungenutzte Arbeitsplatz überhaupt nicht oder lediglich mit einer reduzierten Helligkeit, die an sich kein Arbeiten ermöglichen würde, beleuchtet wird. Alternativ oder ergänzend hierzu kann allerdings auch vorgesehen sein, einen einzelnen Arbeitsplatz selbst nochmals in mehrere Teilbereiche zu unterteilen und wiederum abhängig von der erkannten Benutzung des Arbeitsplatzes diese Teilbereiche entsprechend zu beleuchten. Diese Vorgehensweise ist insbesondere dann sinnvoll, wenn der Arbeitsplatz eine größere Fläche in Anspruch nimmt, die entsprechenden Arbeiten selbst allerdings nur in einem Teilbereich dieser Fläche vorgenommen werden. Auch in diesem Fall kann dann vorgesehen sein, dass lediglich dieser Teilbereich gezielt mit einer normgerechten Beleuchtung beleuchtet wird, während hingegen der bzw. weitere Bereiche, in denen nicht gearbeitet wird, lediglich mit einer ergänzenden reduzierten Helligkeit ausgeleuchtet werden. Selbstverständlich können beide Varianten, also Unterteilung eines einzelnen Arbeitsplatzes in mehrere Bereiche sowie die Beleuchtung lediglich solcher Arbeitsplätze eines größeren Bereichs, die genutzt werden, miteinander kombiniert werden.

Dadurch, dass erfindungsgemäß nur diejenigen Bereiche bzw. Arbeitsplätze normgerecht beleuchtet werden, die tatsächlich genutzt werden, kann der Energieverbrauch der erfindungsgemäßen Beleuchtung deutlich reduziert werden. Die Ausleuchtung aller weiteren Bereiche mit einer gewissen Mindesthelligkeit sorgt hierbei für eine angenehmere Beleuchtungssituation, führt allerdings trotz allem zu den angestrebten Energieeinsparungen. Dabei müssen die von den Leuchtmittel unabhängig voneinander zu beleuchtenden Bereiche nicht zwangsläufig getrennte Bereiche des Arbeitsbereichs darstellen. Vorzugsweise liegt sogar eine gewisse Überlappung vor, so dass harte Helligkeitsübergänge vermieden werden können. Wie später anhand eines Ausführungsbeispiels näher erläutert wird, kann ferner auch vorgesehen sein, dass bestimmte Bereiche vollständig innerhalb eines oder mehrerer anderer Bereiche liegen.

Vorzugsweise sind alle Leuchtmittel zur erfindungsgemäßen Beleuchtung des Arbeitsbereichs, insbesondere jedoch zusätzlich auch die Sensormittel sowie die Steuermittel Bestandteil einer einzelnen Leuchte. Dabei kann es sich insbesondere um eine Stehleuchte handeln, wobei das erfindungsgemäße Konzept allerdings auch mit Hilfe von an der Decke eines Raums angeordneten Leuchten realisiert werden könnte.

Bei den Sensormitteln zum Erhalten von Informationen hinsichtlich der Nutzung des Arbeitsplatzes kann es sich um Anwesenheitssensoren handeln, die gezielt auf bestimmte Bereiche gerichtet sind. Alternativ hierzu können allerdings auch sog. intelligente Sensoren zum Einsatz kommen, welche auf der Nutzung eines Bildsensors beruhen und ein Bild von dem Arbeitsbereich erstellen, wobei dann mit Hilfe entsprechender Softwareroutinen erkannt werden kann, inwiefern einzelne Bereiche des Arbeitsbereichs tatsächlich genutzt werden.

Nachfolgend soll die Erfindung anhand der beiliegenden Zeichnung näher erläutert werden. Es zeigen:
Figuren 1a und 1b Ansichten eines ersten Ausführungsbeispiels einer erfindungsgemäßen Anordnung zur Beleuchtung eines Arbeitsbereichs;
Figur 2 ein zweites Ausführungsbeispiel einer erfindungsgemäßen Anordnung zur Arbeitsbereichbeleuchtung;
Figur 3 ein drittes Ausführungsbeispiel, bei dem ein einzelner zu beleuchtender Arbeitsplatz gemäß der vorliegenden Erfindung in drei Bereiche unterteilt wird; und
Figur 4 ein viertes Ausführungsbeispiel einer erfindungsgemäßen Beleuchtungsanordnung.

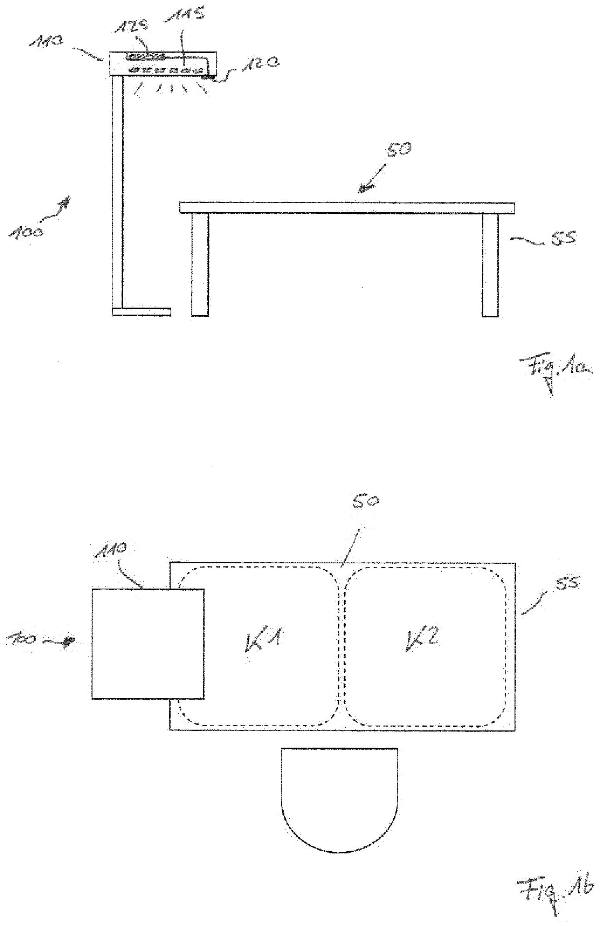

Die Figuren 1a und 1b zeigen ein erstes Ausführungsbeispiel einer erfindungsgemäßen Anordnung zur Beleuchtung eines Arbeitsbereichs, wobei hier die Beleuchtung des Arbeitsbereichs mit Hilfe einer einzelnen Stehleuchte vorgenommen wird. Wie bereits erwähnt, stellen Stehleuchten das bevorzugte Ausführungsbeispiel zur Realisierung der Erfindung dar, da diese primär zur Erzielung einer individuellen Arbeitsplatzbeleuchtung genutzt werden. Grundsätzlich wäre es allerdings auch denkbar, das erfindungsgemäße Konzept mit Hilfe von Deckenleuchten, insbesondere abgehängten Deckenleuchten, die sich also verhältnismäßig nahe an den zu beleuchtenden Bereichen befinden, zu realisieren.

Bei dem in den Figuren 1a und 1b dargestellten Ausführungsbeispiel wird zunächst davon ausgegangen, dass mit Hilfe der mit dem Bezugszeichen 100 versehenen Stehleuchte ein einzelner Arbeitsplatz 50 - schematisch dargestellt durch den Schreibtisch 55 - beleuchtet werden soll. Dieser Arbeitsplatz 50 ist verhältnismäßig groß dimensioniert, wobei die Leuchte 100 derart ausgeführt ist, dass sie grundsätzlich in der Lage ist, den gesamten Arbeitsplatz 50 normgerecht zu beleuchten. D.h., die in dem Leuchtenkopf 110 der Leuchte 100 angeordneten Leuchtmittel 115 sind in der Lage, die gesamte Fläche des Tisches 55 mit einer ausreichenden Helligkeit zu beleuchten. Ferner ist die Beleuchtung vorzugsweise derart, dass das Licht blendfrei von dem Leuchtenkopf 110 nach unten abgegeben wird, um störende Blendeffekte oder Reflexionen zu vermeiden. Nachfolgend soll allerdings die Richtung der Lichtabgabe nicht weiter berücksichtigt werden. Entscheidend ist für die vorliegende Erfindung in erster Linie die Frage, mit welcher Helligkeit verschiedene Bereiche beleuchtet werden.

Wie bereits erwähnt ist also die Leuchte 100 prinzipiell derart ausgeführt, dass die gesamte Fläche des Schreibtisches 55 ggf. normgerecht, also mit hoher Helligkeit beleuchtet werden kann. Die Fläche des Tisches 55 ist allerdings derart groß, dass für das eigentliche Arbeiten in der Regel nur Teilbereiche hiervon genutzt werden, während andere Bereiche in erster Linie bspw. der Lagerung von Unterlagen oder dergleichen dienen. Ein vernünftiges Arbeiten an dem Arbeitsplatz 50 wäre bereits dann möglich, wenn zumindest diejenigen Bereiche, welche zum Arbeiten genutzt werden, ausreichend hell beleuchtet werden, wobei jedoch alle weiteren Bereiche nicht oder ggf. mit reduzierter Helligkeit beleuchtet werden.

Erfindungsgemäß weist deshalb die Leuchte 100 neben den Leuchtmitteln 115 zusätzliche Sensormittel 120 auf, welche auf den Arbeitsplatz 50 gerichtet sind und in der Lage sind, zu erkennen, ob und ggf. wie der Arbeitsplatz 50 genutzt wird. Ferner sind die Leuchtmittel 115 der Leuchte 100 derart ausgeführt, dass sie verschiedene Bereiche des Arbeitsplatzes 50 unabhängig voneinander beleuchten können.

Im dargestellten Ausführungsbeispiel wird zunächst in einfacher Weise davon ausgegangen, dass der Arbeitsplatz 50 in zwei Bereiche K1 und K2 unterteilt wird. Die Leuchtmittel 115 der Leuchte 100 können jeden dieser beiden Bereiche K1 und K2 getrennt voneinander mit einer veränderbaren Helligkeit beleuchten, wobei erfindungsgemäß vorgesehen ist, dass derjenige Bereich, in dem eine Nutzung des Arbeitsplatzes 50 vorliegt, normgerecht, also mit hoher Helligkeit beleuchtet wird, während hingegen der nicht genutzte Bereich lediglich mit einer reduzierten Helligkeit beleuchtet wird. Diese automatisierte, nutzungsabhängige Beleuchtung des Arbeitsplatzes 50 wird mit Hilfe der Sensormittel 120 erzielt, welche also in der Lage sind, zu erkennen, ob einer der beiden Bereiche K1, K2 oder ggf. beide Bereiche genutzt werden. Die von den Sensormitteln 120 erhaltenen Informationen werden dann an eine in dem Leuchtenkopf angeordnete Steuereinheit 125 weitergeleitet, welche eine entsprechende Ansteuerung der Leuchtmittel 115 übernimmt. Selbstverständlich kann dabei vorgesehen sein, dass die Leuchtmittel 115 generell nur dann aktiviert werden, wenn überhaupt eine Nutzung des Arbeitsplatzes 50 erkannt wurde.

Die Ausgestaltung der Leuchtmittel 115 derart, dass die beiden Bereiche K1 und K2 wahlweise mit einer individuellen Helligkeit beleuchtet werden können, kann in beliebiger Weise erfolgen. Sinnvoller Weise wird es sich jeweils um getrennte Leuchtmittel handeln, denen jeweils eine entsprechende Optik zugeordnet ist, so dass das Licht der jeweiligen Leuchtmittel auf den zugehörigen Bereich gerichtet wird. Dabei muss nicht zwangsläufig - wie dargestellt - eine Trennung zwischen den beiden Bereichen K1 und K2 vorliegen. Idealerweise werden diese Bereiche sogar geringfügig überlappen, um zu starke Helligkeitsschwankungen im Übergangs- bzw. Grenzbereich zu vermeiden. Wesentlich jedoch ist, dass die Gesamtheit der individuell zu beleuchtenden Bereiche, im vorliegenden Fall also der Bereiche K1 und K2, den gesamten Arbeitsplatz 50 abdeckt.

Bzgl. der Sensormittel 120 zum Erkennen, ob und ggf. welcher der Bereiche K1 und K2 zur Arbeit genutzt wird, bestehen ebenfalls verschiedene Möglichkeiten, diese zu realisieren. Bspw. können einfache Anwesenheits- oder Bewegungssensoren zum Einsatz kommen, wobei in diesem Fall dann jedem einzelnen Bereich ein einzelner Sensor zugeordnet ist. D.h., entsprechend der Anzahl der getrennt beleuchtbaren Bereiche existiert auch eine Anzahl von einzelnen Sensoren, wobei dann der von einem einzelnen Sensor erfasste Bereich dem zugehörigen zu beleuchtenden Bereich entspricht. D.h., im Ausführungsbeispiel der Figuren 1a und 1b müssten zwei Sensoren zum Einsatz kommen, die jeweils den Bereich K1 bzw. K2 erfassen.

Eine alternative und komfortablere Möglichkeit würde darin bestehen, einen intelligenten Sensor zu verwenden, der auf der Nutzung von Bilderfassungsmitteln beruht. In diesem Fall wird also mit Hilfe der Bilderfassungsmittel der gesamte Arbeitsplatz 50 optisch erfasst und durch entsprechende Auswertung des Bildes festgestellt, ob und - falls ja - einer der Unterbereiche K1 und K2 genutzt wird. Derartige intelligente Sensoren sind bereits bekannt, bspw. auch aus der DE 10 2010 003 804 A1 der Anmelderin.

Die erfindungsgemäße Lösung erlaubt also, den Arbeitsplatz 50 jederzeit mit der entsprechend der Norm vorgesehenen Helligkeit zu beleuchten. Allerdings findet nutzungsabhängig eine entsprechende Beleuchtung nur derjenigen Bereiche statt, die tatsächlich genutzt werden. Andere Bereiche, die keine entsprechende Beleuchtung erfordern, werden entweder gar nicht oder nur mit reduzierter Helligkeit beleuchtet, so dass insgesamt der Energieverbrauch bei gleichbleibend hoher Qualität der Arbeitsplatzbeleuchtung reduziert werden kann. Dabei kann selbstverständlich vorgesehen sein, dass bei der Beleuchtung einzelner Bereiche zusätzlich auch das von außen einfallende Tageslicht berücksichtigt wird. In diesem Fall kommt wiederum der bevorzugte, oben erwähnte intelligente Sensor zum Einsatz, da die Bildinformationen gleichzeitig auch Auskunft über die an dem zu beleuchtenden Bereichen vorliegende Helligkeit liefern, also es unmittelbar ermöglichen, das Tageslicht zu berücksichtigen.

Des Weiteren ist darauf hinzuweisen, dass - insbesondere wiederum bei der Nutzung des intelligenten Sensors - auch vorgesehen sein könnte, diesen nicht unmittelbar an der Leuchte 100, sondern getrennt hiervon anzuordnen. Der Sensor 120 kommuniziert dann in entsprechender Weise mit der Steuereinheit 125 der Leuchte 100.

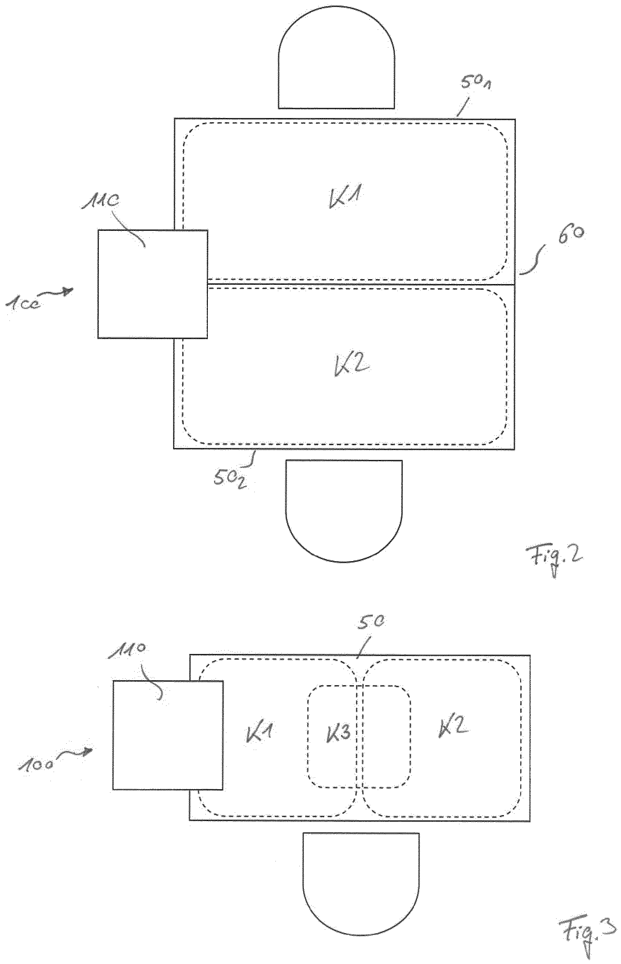

Ein zweites Ausführungsbeispiel einer erfindungsgemäßen Beleuchtungsanordnung ist in Figur 2 dargestellt. In diesem Fall wird davon ausgegangen, dass die Leuchte 100 dazu dient, einen Arbeitsbereich 60 zu beleuchten, der zwei einander gegenüberliegende Arbeitsplätze 50₁ und 50₂ aufweist. Im vorliegenden Fall wird keine Unterteilung der einzelnen Arbeitsplätze 50₁ und 50₂ vorgenommen, sondern es findet lediglich eine Unterteilung des gesamten Arbeitsbereichs 60 in die zwei Arbeitsplätze 50₁ und 50₂ statt. Wiederum können diese Bereiche K1 und K2 durch die Leuchtmittel 115 der Leuchte 100 individuell beleuchtet werden, wobei erfindungsgemäß eine nutzungsabhängige Beleuchtung stattfindet. Es wird in diesem Fall also festgestellt, ob einer der beiden Arbeitsplätze 50₁ bzw. 50₂ genutzt wird oder nicht. Dieser wird dann entsprechend normgerecht beleuchtet. Selbstverständlich werden für den Fall, dass beide Plätze genutzt werden, auch beide Bereiche entsprechend beleuchtet. Die Vorgehensweise entspricht derjenigen des Ausführungsbeispiels gemäß der Figuren 1a und 1b. Auch die Sensormittel können in entsprechender Weise ausgeführt sein.

Ein drittes Ausführungsbeispiel, welches eine Weiterbildung des Beispiels von Figur 1 darstellt, ist in Figur 3 gezeigt, wobei wiederum von einem einzelnen Arbeitsplatz ausgegangen wird. Dieser wird nunmehr allerdings in drei Bereiche K1, K2 und K3 unterteilt, wobei die ersten beiden Bereiche K1 und K2 den beiden Tischhälften entsprechen, wie dies auch bei dem Ausführungsbeispiel der Figuren 1a und 1b der Fall war. Der dritte Bereich K3 stellt einen zentralen Fokus im Bereich des Arbeitsplatzes 50 dar, der ggf. mit einer besonders hohen Helligkeit beleuchtet werden kann, um hier ein spezielles Arbeiten bei hoher Helligkeit zu ermöglichen. Dieser Bereich K3 würde bspw. gezielt beleuchtet werden, falls eine Nutzung des Arbeitsplatzes 50 in diesem zentralen Bereich festgestellt wird. In diesem Fall können dann die weiteren Bereiche K1 und K2 mit reduzierter Helligkeit beleuchtet werden.

Erkennbar ist also anhand dieses dritten Ausführungsbeispiels, dass die einzelnen Bereiche nicht unbedingt getrennt voneinander definiert sein müssen, sondern durchaus der Fall auftreten kann, dass ein Bereich vollständig innerhalb eines anderen oder mehrerer anderer Bereiche liegt, wie dies hier vorgesehen ist.

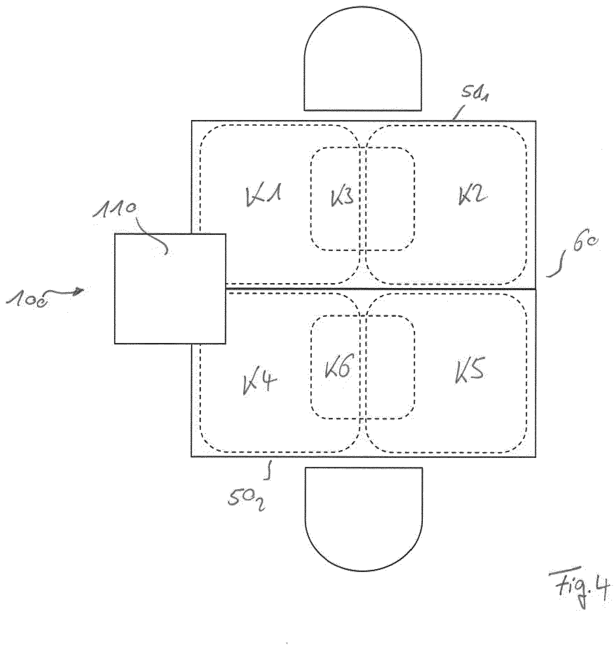

Figur 4 zeigt schließlich eine Kombination der Ausführungsbeispiele der Figuren 2 und 3. In diesem Fall dient also wiederum eine einzelne Leuchte dazu, einen Arbeitsbereich 60 mit zwei Arbeitsplätzen 50₁ und 50₂ zu beleuchten, wobei jeder der beiden Arbeitsplätze wie bei der Variante gemäß Figur 3 drei Bereiche K1, K2 und K3 bzw. K4, K5 und K6 aufweist, welche nutzungsabhängig mit einer individuellen Helligkeit beleuchtet werden können.

Selbstverständlich wäre es denkbar, innerhalb eines Arbeitsbereichs mehr als die in Figur 4 dargestellten sechs Bereiche zu definieren. Da gleichzeitig hiermit allerdings auch eine komplexere Ausgestaltung der Leuchtmittel verbunden ist, sollte die Anzahl der Bereiche nicht zu hoch sein. Die dargestellten Ausführungsbeispiele stellen besonders bevorzugte Varianten dar, bei der der resultierende Mehraufwand hinsichtlich der Gestaltung der Leuchtmittel vertretbar ist und insbesondere durch die sich ergebenen Vorteile hinsichtlich einer flexiblen, energiesparenden Beleuchtung überwogen werden.

## Patentansprüche

1. Anordnung zur Beleuchtung eines Arbeitsbereichs, mit
• Leuchtmitteln (115), welche dazu ausgebildet sind, zumindest zwei Bereiche (K1, K2, K3) des Arbeitsbereichs unabhängig voneinander zu beleuchten,
• Sensormitteln (120) zum Ermitteln von Informationen bzgl. der Benutzung des Arbeitsbereichs sowie
• Steuermitteln (125), welche die Leuchtmittel (115) abhängig von durch die Sensormittel (120) zur Verfügung gestellten Informationen ansteuern,
**dadurch gekennzeichnet,**
**dass** der Arbeitsbereich zumindest einen Arbeitsplatz (50) aufweist und die Leuchtmittel (115) dazu ausgebildet sind, drei Teilbereiche (K1, K2, K3) des Arbeitsplatzes (50) unabhängig voneinander zu beleuchten, wobei zwei Teilbereiche (K1, K2) Hälften des Arbeitsplatzes entsprechen und ein dritter Teilbereich (K3) einen zentralen Fokus im Bereich des Arbeitsplatzes (50) darstellt, der innerhalb der beiden weiteren Teilbereiche (K1, K2) liegt,
und wobei die Steuereinheit (125) dazu ausgebildet ist, die Leuchtmittel (115) für den Fall, dass der Arbeitsplatz in dem dritten Bereich (K3) genutzt wird, derart anzusteuern, dass der dritte Bereich (K3) mit hoher Helligkeit beleuchtet wird und die beiden weiteren Teilbereiche (K1, K2) mit einer reduzierten Helligkeit beleuchtet werden.

2. Anordnung nach Anspruch 1,
**dadurch gekennzeichnet,**
**dass** die Leuchtmittel (115) dazu ausgebildet sind, einen Arbeitsbereich mit zwei vorzugsweise zusammenhängenden Arbeitsplätzen (50₁, 50₂) zu beleuchten.

3. Anordnung nach Anspruch 2,
**dadurch gekennzeichnet,**
**dass** die Steuereinheit (125) dazu ausgebildet ist, die Leuchtmittel (115) derart anzusteuern, dass alle Arbeitsplätze (50₁, 50₂) mit einer Mindesthelligkeit beleuchtet werden, sofern zumindest einer der Arbeitsplätze genutzt wird.

4. Anordnung nach einem der vorherigen Ansprüche,
**dadurch gekennzeichnet,**
**dass** die Sensormittel (120) mehrere Bewegungs- oder Anwesenheitssensoren umfassen, welche auf die voneinander unabhängig beleuchtbaren Bereiche (K1, K2, K3) gerichtet sind.

5. Anordnung nach einem der Ansprüche 1 bis 4,
**dadurch gekennzeichnet,**
**dass** die Sensormittel (120) einen auf Bilderfassungsmitteln basierenden Sensor aufweisen.

6. Anordnung nach einem der vorherigen Ansprüche,
**dadurch gekennzeichnet,**
**dass** die Sensormittel (120) getrennt von den Leuchtmitteln (115) angeordnet sind.

7. Leuchte, insbesondere Stehleuchte (100), welche eine Anordnung zur Beleuchtung eines Arbeitsbereichs nach einem der Ansprüche 1 bis 6 beinhaltet.

8. Verfahren zur Beleuchtung eines Arbeitsbereichs mit Leuchtmitteln (115), welche dazu ausgebildet sind, zumindest zwei Bereiche (K1, K2, K3) des Arbeitsbereichs unabhängig voneinander zu beleuchten,
wobei mit Hilfe von Sensormitteln (120) Informationen bzgl. der Benutzung des Arbeitsbereichs ermittelt und davon abhängig die Leuchtmittel (115) angesteuert werden,
**dadurch gekennzeichnet,**
**dass** der Arbeitsbereich zumindest einen Arbeitsplatz (50) aufweist und die Leuchtmittel (115) dazu ausgebildet sind, drei Teilbereiche (K1, K2, K3) des Arbeitsplatzes (50) unabhängig voneinander zu beleuchten, wobei zwei Teilbereiche (K1, K2) Hälften des Arbeitsplatzes entsprechen und ein dritter Teilbereich (K3) einen zentralen Fokus im Bereich des Arbeitsplatzes (50) darstellt, der innerhalb der beiden weiteren Teilbereiche (K1, K2) liegt,
und wobei die Leuchtmittel (115) für den Fall, dass der Arbeitsplatz in dem dritten Bereich (K3) genutzt wird, derart angesteuert werden, dass der dritte Bereich (K3) mit hoher Helligkeit beleuchtet wird und die beiden weiteren Teilbereiche (K1, K2) mit einer reduzierten Helligkeit beleuchtet werden.

9. Verfahren nach Anspruch 8,
**dadurch gekennzeichnet,**
**dass** der Arbeitsbereich zwei vorzugsweise zusammenhängende Arbeitsplätze (50₁, 50₂) aufweist.

10. Verfahren nach Anspruch 9,
**dadurch gekennzeichnet,**
**dass** die Leuchtmittel (115) derart angesteuert werden, dass alle Arbeitsplätze (50₁, 50₂) mit einer Mindesthelligkeit beleuchtet werden, sofern zumindest einer der Arbeitsplätze genutzt wird.

## Claims

1. Arrangement for illuminating a workspace, comprising:
• lighting means (115) which are designed to illuminate at least two regions (K1, K2, K3) of the workspace independently of one another,
• sensor means (120) for determining information relating to the use of the workspace, and
• control means (125) which control the lighting means (115) depending on information provided by the sensor means (120),
**characterized in that** the workspace has at least one work station (50), and the lighting means (115) are designed to illuminate three portions (K1, K2, K3) of the work station (50) independently of one another, two portions (K1, K2) corresponding to halves of the work station and a third portion (K3) representing a central focus in the region of the work station (50), which focus is located within the two further portions (K1, K2),
and the control unit (125) being designed to control the lighting means (115), in the event that the third region (K3) of the work station is being used, such that the third region (K3) is illuminated with high brightness and the two further portions (K1, K2) are illuminated with a reduced brightness.

2. Arrangement according to claim 1,
**characterized in that** the lighting means (115) are designed to illuminate a workspace which has two preferably contiguous work stations (50₁, 50₂).

3. Arrangement according to claim 2,
**characterized in that** the control unit (125) is designed to control the lighting means (115) such that all of the work stations (50₁, 50₂) are ilium inated at a minimum brightness, provided that at least one of the work stations is being used.

4. Arrangement according to any of the preceding claims,
**characterized in that** the sensor means (120) comprise a plurality of movement or occupancy sensors which are directed to the regions (K1, K2, K3) that can be illuminated independently of one another.

5. Arrangement according to any of claims 1 to 4,
**characterized in that** the sensor means (120) have a sensor based on image capturing means.

6. Arrangement according to any of the preceding claims,
**characterized in that** the sensor means (120) are arranged separately from the lighting means (115).

7. Lamp, in particular a floor lamp (100), which contains an arrangement for illuminating a workspace according to any of claims 1 to 6.

8. Method for illuminating a workspace using lighting means (115) which are designed to illuminate at least two regions (K1, K2, K3) of the workspace independently of one another,
information relating to the use of the workspace being determined with the aid of sensor means (120), and the lighting means (115) being controlled depending thereon,
**characterized in that** the workspace has at least one work station (50), and the lighting means (115) are designed to illuminate three portions (K1, K2, K3) of the work station (50) independently of one another, two portions (K1, K2) corresponding to halves of the work station and a third portion (K3) representing a central focus in the region of the work station (50), which focus is located within the two further portions (K1, K2),
and the lighting means (115) being controlled, in the event that the third region (K3) of the work station is being used, such that the third region (K3) is illuminated with high brightness and the two further portions (K1, K2) are illuminated with a reduced brightness.

9. Method according to claim 8,
**characterized in that** the workspace has two preferably contiguous work stations (50₁, 50₂).

10. Method according to claim 9,
**characterized in that** the lighting means (115) are controlled such that all of the work stations (50₁, 50₂) are illuminated with a minimum brightness, provided that at least one of the work stations is being used.

## Revendications

1. Agencement permettant d'éclairer une zone de travail, comportant
• des moyens d'éclairage (115) conçus pour éclairer au moins deux zones (K1, K2, K3) de la zone de travail indépendamment les unes des autres,
• des moyens capteurs (120) permettant de déterminer des informations concernant l'utilisation de la zone de travail, ainsi que
• des moyens de commande (125) qui commandent les moyens d'éclairage (115) en fonction d'informations fournies par les moyens capteurs (120), **caractérisé en ce**
**que** la zone de travail présente au moins un poste de travail (50) et les moyens d'éclairage (115) sont conçus pour éclairer trois zones partielles (K1, K2, K3) du poste de travail (50) indépendamment les unes des autres, dans lequel deux zones partielles (K1, K2) correspondent à des moitiés du poste de travail et une troisième zone partielle (K3) représente un point central dans la zone du poste de travail (50), lequel point central se trouve à l'intérieur des deux autres zones partielles (K1, K2),
et dans lequel l'unité de commande (125) est configurée pour commander les moyens d'éclairage (115) dans le cas où le poste de travail est utilisé dans la troisième zone (K3), de telle sorte que la troisième zone (K3) est éclairée avec une luminosité élevée et les deux autres zones partielles (K1, K2) sont éclairées avec une luminosité réduite.

2. Agencement selon la revendication 1,
**caractérisé en ce**
**que** les moyens d'éclairage (115) sont conçus pour éclairer une zone de travail comportant deux postes de travail (50₁, 50₂) de préférence liés.

3. Agencement selon la revendication 2,
**caractérisé en ce**
**que** l'unité de commande (125) est configurée pour commander les moyens d'éclairage (115) de telle sorte que tous les postes de travail (50₁, 50₂) sont éclairés avec une luminosité minimale si au moins l'un des postes de travail est utilisé.

4. Agencement selon l'une des revendications précédentes,
**caractérisé en ce**
**que** les moyens capteurs (120) comprennent plusieurs capteurs de mouvement ou de présence qui sont dirigés vers les zones (K1, K2, K3) pouvant être éclairées indépendamment les unes des autres.

5. Agencement selon l'une des revendications 1 à 4,
**caractérisé en ce**
**que** les moyens capteurs (120) présentent un capteur basé sur des moyens de capture d'images.

6. Agencement selon l'une des revendications précédentes,
**caractérisé en ce**
**que** les moyens capteurs (120) sont disposés séparément des moyens d'éclairage (115).

7. Luminaire, en particulier lampadaire (100), lequel inclut un agencement permettant d'éclairer une zone de travail selon l'une des revendications 1 à 6.

8. Procédé permettant l'éclairage d'une zone de travail à l'aide de moyens d'éclairage (115) conçus pour éclairer au moins deux zones (K1, K2, K3) de la zone de travail indépendamment les unes des autres,
dans lequel, à l'aide de moyens capteurs (120), des informations concernant l'utilisation de la zone de travail sont déterminées et les moyens d'éclairage (115) sont commandés en fonction desdites informations,
**caractérisé en ce**
**que** la zone de travail présente au moins un poste de travail (50) et les moyens d'éclairage (115) sont conçus pour éclairer trois zones partielles (K1, K2, K3) du poste de travail (50) indépendamment les unes des autres, dans lequel deux zones partielles (K1, K2) correspondent à des moitiés du poste de travail et une troisième zone partielle (K3) représente un point central dans la zone du poste de travail (50), lequel point central se trouve à l'intérieur des deux autres zones partielles (K1, K2),
et dans lequel, dans le cas où le poste de travail est utilisé dans la troisième zone (K3), les moyens d'éclairage (115) sont commandés de telle sorte que la troisième zone (K3) est éclairée avec une luminosité élevée et les deux autres zones partielles (K1, K2) sont éclairées avec une luminosité réduite.

9. Procédé selon la revendication 8,
**caractérisé en ce**
**que** la zone de travail présente deux postes de travail (50₁, 50₂) de préférence liés.

10. Procédé selon la revendication 9,
**caractérisé en ce**
**que** les moyens d'éclairage (115) sont commandés de telle sorte que tous les postes de travail (50₁, 50₂) sont éclairés avec une luminosité minimale si au moins l'un des postes de travail est utilisé.
